# EUROPÄISCHE PATENTSCHRIFT

(11) **EP 3 092 480 B1**
(45) Veröffentlichungstag und Bekanntmachung des Hinweises auf die Patenterteilung: **25.07.2018**
(21) Anmeldenummer: 14806270.6
(22) Anmeldetag: 03.12.2014
(51) Int. Cl.: G01N 27/406

(54) **VERFAHREN UND VORRICHTUNG ZUR DIAGNOSE DER MESSFÄHIGKEIT EINER ABGAS-SONDE**
METHOD AND DEVICE FOR DIAGNOSING THE MEASURING ABILITY OF AN EXHAUST GAS PROBE
PROCÉDÉ ET DISPOSITIF DE DIAGNOSTIC DE LA CAPACITÉ DE MESURE D'UNE SONDE DE GAZ D'ÉCHAPPEMENT

(30) Priorität: 07.01.2014 DE 102014200068
(43) Veröffentlichungstag der Anmeldung: 16.11.2016
(73) Patentinhaber: Robert Bosch GmbH, 70442 Stuttgart (DE)
(72) Erfinder: REINHARDT, Goetz, 71032 Boeblingen (DE); BUCHHOLZ, Martin, 74321 Bietigheim-Bissingen (DE)
(86) Internationale Anmeldenummer: PCT/EP2014/076359
(87) Internationale Veröffentlichungsnummer: WO 2015/104101

(56) Entgegenhaltungen:
- DE-A1-102006 062 055
- DE-A1-102007 057 707
- DE-A1-102010 000 663

## Beschreibung

Die Erfindung betrifft ein Verfahren zur Diagnose einer Messfähigkeit einer Abgas-Sonde in einem Abgaskanal einer Brennkraftmaschine, wobei als Abgas-Sonde ein Sondenaufbau mit einem Speichervolumen in einem Referenzgaskanal, zumindest einer einem mit dem Abgaskanal verbundenen Elektrodenhohlraum zugewandten ersten Elektrode und einer dem Referenzgaskanal zugewandten zweiten Elektrode verwendet wird.

Die Erfindung betrifft weiterhin eine Vorrichtung zur Diagnose einer Messfähigkeit einer Abgas-Sonde in einem Abgaskanal einer Brennkraftmaschine wobei die Abgas-Sonde einen Referenzgaskanal mit einem Speichervolumen und zumindest einer einem mit dem Abgaskanal verbundenen Elektrodenhohlraum zugewandten erste Elektrode und eine dem Referenzgaskanal zugewandte zweite Elektrode aufweist und wobei der Abgas-Sonde eine Steuerung zur Beaufschlagung der Abgas-Sonde mit Spannungs-und Stromsignalen und zur Auswertung von Spannungs- und Stromsignalen zugeordnet ist.

Abgas-Sonden in Form von Lambda-Sonden im Abgaskanal einer Brennkraftmaschine werden zur Bestimmung der Zusammensetzung eines der Brennkraftmaschine zugeführten Luft-Kraftstoff-Gemischs verwendet. Gemäß gesetzlicher Vorschriften müssen die Abgas-Sonden im Betrieb auf korrekte Funktion, auf eine so genannte "Messfähigkeit", überprüft werden. Hierzu kann ein Gas-Gemisch bekannter Zusammensetzung der Abgas-Sonde zugeführt werden und das Ausgangssignal der Abgas-Sonde bewertet werden. Bei der Überprüfung einer Lambda-Sonde auf korrekte Funktion bei einem "fetten" Luft-Kraftstoff-Verhältnis mit einem Lambdawert < 1, der Überprüfung der so genannten "Fettmessfähigkeit", müsste der Lambda-Sonde somit ein solches Gemisch zugeführt werden. Insbesondere bei Dieselmotoren, die im normalen Betrieb im Bereich eines mageren Abgases betrieben werden, führt ein Fettbetrieb für eine Diagnose zu einer erhöhten Emission sowie zusätzlichem Kraftstoff-Verbrauch und wird deshalb vorzugsweise vermieden. Sonstige Möglichkeiten, eine fette Gas-Zusammensetzung an der Lambda-Sonde bereitzustellen, ohne einen Eingriff in den Motorbetrieb vorzunehmen, sind aus vielfachen Gründen nicht realisierbar.

Eine zuverlässige Diagnose auf anderem Weg ist allerdings auch mit Nachteilen behaftet. Zur Bestimmung des Lambdawerts wird der Pumpstrom der Lambda-Sonde verwendet. Der Pumpstrom ist bei magerem Abgas positiv, bei fettem Abgas negativ. Die Transportprozesse innerhalb der Lambdasonde bei magerem und fettem Abgas unterscheiden sich erheblich hinsichtlich Stromrichtung, Elektrodenreaktion und Gasen an den Elektroden. Für eine realitätsnahe Diagnose müssen diese Bedingungen daher, soweit zur Diagnose erforderlich, bereitgestellt werden.

Abgas-Sonden können als Breitband-Lambda-Sonden, Lambda-Sprungsonden, zweizellige Breitband-Lambda-Sonden oder als einzellige Grenzstromsonden ausgeführt sein. Einzellen-Grenzstromsonden können die Besonderheit aufweisen, dass sie einen großen Referenzgaskanal als Sauerstoff-Speicher enthalten.

Die DE102011005490A1 offenbart ein Verfahren zum Betrieb eines Sensorelements zur Erfassung mindestens einer Eigenschaft eines Gases in einem Messgasraum, wobei das Sensorelement mindestens eine Pumpzelle mit mindestens zwei Elektroden und mindestens einem die Elektroden verbindenden Festelektrolyten umfasst, wobei mindestens eine erste Elektrode der Pumpzelle mit Gas aus dem Messgasraum beaufschlagbar ist, wobei mindestens eine zweite Elektrode der Pumpzelle mit mindestens einem Referenzkanal in Verbindung steht, wobei bei dem Verfahren überprüft wird, ob ein Pumpstrom durch die Pumpzelle durch eine Beaufschlagung der ersten Elektrode mit Gas begrenzt wird oder ob der Pumpstrom durch den Referenzkanal begrenzt wird. In der Schrift wird weder auf die Diagnose der Fettmessfähigkeit eingegangen noch wird auf die Möglichkeit eingegangen, zur Diagnose der Fettmessfähigkeit der Lambdasonde gezielt fette Gaskomponenten im Messgasraum zu erzeugen.

Die DE102010039188A1 offenbart ein Verfahren zur Erfassung mindestens einer Eigenschaft eines Gases in einem Messgasraum, insbesondere zum Nachweis einer Gaskomponente des Gases, wobei mindestens ein Sensorelement mit mindestens einer Zelle verwendet wird, wobei die Zelle mindestens eine erste Elektrode, mindestens eine zweite Elektrode und mindestens einen die erste Elektrode und die zweite Elektrode verbindenden Festelektrolyten umfasst, wobei die erste Elektrode mit Gas aus dem Messgasraum beaufschlagbar ist, wobei die zweite Elektrode mit mindestens einem Referenzgasraum in Verbindung steht, wobei der Referenzgasraum eingerichtet ist, um einen Vorrat einer Gaskomponente des Gases zu speichern, wobei das Verfahren mindestens zwei Betriebsmodi umfasst:
- mindestens einen Messmodus, wobei in dem Messmodus die Zelle als Pumpzelle betrieben wird und aus mindestens einem Pumpstrom durch die Pumpzelle auf die Eigenschaft geschlossen wird, und
- mindestens einen Diagnosemodus, wobei in dem Diagnosemodus eine Speicherfähigkeit des Referenzgasraums überprüft wird, wobei mindestens eine durch eine an der Zelle anliegende Nernstspannung beeinflusste Messgröße erfasst wird und aus der Messgröße auf die Speicherfähigkeit geschlossen wird.
In der Schrift wird beschrieben, wie die Sauerstoffspeicherfähigkeit innerhalb der Lambdasonde mit dem Pumpstrom beeinflussbar ist. Weiterhin werden Mess-Modi beschrieben, wobei auch auf die Abgasmessung bei mager betriebenen Motoren, insbesondere bei Dieselmotoren, eingegangen wird. Es wird jedoch nicht auf die Diagnose der Fettmessfähigkeit eingegangen.

Die DE102010039392A1 offenbart eine Vorrichtung zur Erfassung eines Sauerstoffanteils eines Gases in einem Messgasraum, umfassend mindestens ein Sensorelement, wobei das Sensorelement mindestens eine Nernstzelle mit mindestens einer ersten Elektrode, mindestens einer zweiten Elektrode und mindestens einem die erste Elektrode und die zweite Elektrode verbindenden Festelektrolyten aufweist, wobei die erste Elektrode mit Gas aus dem Messgasraum beaufschlagbar ist, wobei die zweite Elektrode in einem Referenzgasraum angeordnet ist, wobei die Vorrichtung weiterhin mindestens eine Steuerung aufweist, wobei die Steuerung eingerichtet ist, um eine Spannung der Nernstzelle zu erfassen, wobei die Steuerung weiterhin eine Beaufschlagungsvorrichtung zur Erzeugung eines Referenzpumpstroms durch die Nernstzelle aufweist, wobei die Beaufschlagungsvorrichtung derart eingerichtet ist, dass eine Differenz Δl_{pref} der Referenzpumpströme im fetten Luftzahlbereich und im mageren Luftzahlbereich nicht mehr als 50% eines über die Luftzahlbereiche gemittelten Referenzpumpstroms l_{pref} beträgt. In der Schrift wird auf die Beschaltung der Abgassonde eingegangen ohne jedoch die Problematik zur Diagnose der Fettmessfähigkeit bei mager betriebenen Motoren zu beschreiben oder zu lösen.

Es ist daher Aufgabe der Erfindung, ein Verfahren und eine Vorrichtung bereitzustellen, welche es ermöglichen, eine Überprüfung der Funktionsfähigkeit einer Abgas-Sonde bei einer Bestimmung der Zusammensetzung eines fetten Abgas-Gemischs durchzuführen, ohne die Abgas-Sonde mit fettem Abgas zu beaufschlagen.

### Offenbarung der Erfindung

Die das Verfahren betreffende Aufgabe der Erfindung wird dadurch gelöst, dass in einer ersten Phase zwischen die erste Elektrode und die zweite Elektrode eine solch hohe elektrische Spannung angelegt wird, dass der Referenzgaskanal durch Zersetzung von Wasser und/oder Kohlendioxid mit zusätzlichem Sauerstoff befüllt wird und dass in einer zweiten Phase ein Pumpstrom in einem die erste Elektrode und die zweiten Elektrode enthaltenden Stromkreis zur Bewertung der Messfähigkeit herangezogen wird. In der ersten Phase wird in einem so genannten "Atem-Modus" der als Sauerstoffspeicher dienende Referenzgaskanal mit Sauerstoff befüllt. Während dieser Phase ist das Ausgangssignal der Abgas-Sonde nicht zur Bestimmung eines Lambdawerts des Gasgemischs geeignet. In der zweiten Phase wird der elektrische Strom in dem Messkreis aus der ersten Elektrode, der zweiten Elektrode, dem Keramik-Grundkörper und einer Steuerelektronik bestimmt. Der Wert des Pumpstroms im System wird von der Elektrodenanordnung, den beteiligten Materialien und der an den Elektroden vorhandenen Zusammensetzungen der Gasgemische bestimmt und wird beispielhaft über einen Spannungsabfall an einem in einer der Zuleitungen der Elektroden eingeschleiften Messwiderstand bestimmt. Die Höhe und Richtung des Stroms wird über Erfahrungswerte und Plausibilitätsbetrachtungen zur Bewertung der Messfähigkeit der Abgas-Sonde herangezogen.

Besonders geeignet ist das Verfahren wenn als Messfähigkeit eine Fettmessfähigkeit der Abgas-Sonde bestimmt wird. Durch die Befüllung des Referenzgaskanals mit Sauerstoff entstehen bei Rückkehr in einen Messmodus der Abgas-Sonde vorübergehend Betriebsbedingungen wie bei einem Betrieb mit fettem Abgas. Im normalen Messbetrieb der Abgas-Sonde in magerem Abgasgemisch, beispielhaft bei einer mit Dieselkraftstoff betriebenen Brennkraftmaschine, diffundiert Sauerstoff aus dem Abgas durch eine Diffusionsbarriere in den Elektrodenhohlraum der Abgas-Sonde. Dort herrscht, bedingt durch die Betriebsstrategie, näherungsweise ein Lambdawert von Lambda = 1. Der in den Elektrodenhohlraum eindiffundierte Sauerstoff wird an der ersten Elektrode, die auch als innere Pumpelektrode (IPE) bezeichnet wird, in den aus ionenleitfähiger Keramik bestehenden Grundkörper der Abgas-Sonde eingebaut und über die zweite Elektrode, die auch als Abluftelektrode (ALE) bezeichnet wird, in den Referenzgaskanal transportiert. Während des so genannten Atem-Modus wird eine höhere Pumpspannung an die erste und zweite Elektrode angelegt als im normalen Messbetrieb. Hierdurch finden an der ersten Elektrode zusätzlichen elektrochemische Reaktionen statt, wodurch aus im Abgas vorhandenem Kohlendioxid (CO₂) und Wasserdampf (H₂O) zusätzlicher Sauerstoff (O₂) abgespalten und in den Referenzgaskanal transportiert wird. Bei der Reaktion an der ersten Elektrode werden somit Fettgaskomponenten Wasserstoff (H₂) und Kohlenmonoxid (CO) gebildet und in den Elektrodenhohlraum freigesetzt. Es entsteht daher im Elektrodenhohlraum ein reales fettes Gasgemisch mit einem Lambdawert Lambda < 1 obwohl das Gasgemisch im Abgaskanal weiterhin mager mit Lambda > 1 ist.

Besteht der Grundkörper aus Zirkondioxid (ZrO₂), laufen beim Atembetrieb an der ersten Elektrode (IPE) folgende Reaktionen ab:

CO₂ + 2e⁻ (IPE) -> CO + O²⁻ (ZrO₂)

H₂O + 2e⁻ (IPE) -> H₂ + O²⁻ (ZrO₂)

Hierbei bezeichnen e⁻ ein Elektron und O²⁻ ein doppelt negativ geladenes Sauerstoff-Ion. An der zweiten Elektrode (ALE) läuft dabei folgende Reaktion ab:

O²⁻ (ZrO₂) -> 1/2 O₂ + 2e⁻ (ALE)

Hierbei bezeichnet 1/2 O₂ die Hälfte eines Sauerstoffmoleküls, dessen Erzeugung das eigentliche Ziel des Atem-Modus ist. Das Auftreten von CO und H₂ ist ein Nebeneffekt, der erfindungsgemäß zur Bestimmung der Fettmessfähigkeit ausgenutzt wird. Vorteilhaft ist, dass der Atem-Modus in der Steuerung als Programmablauf bereits vorgesehen ist und nicht zusätzlich zur Umsetzung des erfindungsgemäßen Verfahrens eingeführt werden muss.

In der zweiten Phase wird die erhöhte Pumpspannung zurückgenommen und die Abgas-Sonde kehrt in den Messmodus zurück. Hierbei wird zunächst das fette Gasgemisch im Elektrodenhohlraum oxidiert, bis näherungsweise ein Lambdawert Lambda = 1 erreicht ist. Der hierfür notwendige Sauerstoff wird dem Referenzgaskanal entnommen und an der ersten Elektrode (IPE) der Pumpzelle bereitgestellt. Ein zusätzlicher Anteil Sauerstoff wird dem mageren Abgas entnommen und gelangt über die Diffusionsbarriere in den Elektrodenhohlraum.

Während der zweiten Phase herrschen somit Bedingungen an der Abgas-Sonde wie bei einem Messbetrieb mit fettem Abgas-Gemisch:
- Transport von Sauerstoff vom Referenzgaskanal in den Elektrodenhohlraum
- Oxidation von Fettgaskomponenten an der ersten Elektrode mit dort bereitgestelltem Sauerstoff
- Stromrichtung und Betriebsart im elektrischen Messkreis entsprechen fettem Abgas-Gemisch.
Aufgrund des Sauerstofftransports tritt in der zweiten Phase kurzzeitig ein negativer Stromimpuls im Messkreis auf. Dieser Stromimpuls bei Rückkehr in den Messmodus wird für die Diagnose der Messfähigkeit ausgenutzt. Fehlt der Stromimpuls wird auf einen Defekt im Messkreis oder in der Abgas-Sonde geschlossen.

Das erfindungsgemäße Verfahren nutzt vorteilhaft aus, dass zur Bewertung der Fettmessfähigkeit der Abgas-Sonde die zweite Phase mit einem Sauerstoff-Transport vom Referenzgaskanal zum Elektrodenhohlraum verwendet wird. Unter solchen Bedingungen, wie sie auch bei realem fetten Abgas der Brennkraftmaschine vorliegen, kann ein Fettmess-Betrieb überprüft werden. Insbesondere sind Stromrichtung und Betriebsart im gesamten elektrischen Messkreis gleichartig zu denen im Messbetrieb mit einem Abgasgemisch mit einem Lambdawert von Lambda < 1. Bei Rückkehr vom Atem-Modus in den Messmodus tritt ein Stromimpuls infolge des Fettmessbetriebs mit fettem Abgas im Elektrodenhohlraum auf, der für die Diagnose ausgenutzt wird. Fehlt der negative Pumpstrom-Impuls, wird auf einen Defekt im Messkreis oder der Abgas-Sonde geschlossen. Durch eine geeignete Wahl der Häufigkeit des Atem-Modus kann erreicht werden, dass die Anforderungen zur Einhaltung des "in use monitor performance ratio" (IUMPR) eingehalten werden.

Eine Verbesserung der Aussagegenauigkeit des erfindungsgemäßen Verfahrens wird erreicht, indem zur Bewertung der Messfähigkeit der Abgas-Sonde zusätzlich Betriebsparameter und/oder Funktionswerte während des "Atem-Modus" herangezogen werden und indem als Funktionswerte zumindest die Spannung zwischen der ersten Elektrode und der zweiten Elektrode, ein durch eine erste und/oder zweite Zuleitung zu der ersten und der zweite Elektrode fließender Strom und/oder ein zeitlicher Verlauf der Spannung und/oder des Stroms einzeln oder in Kombination der Maßnahmen verwendet werden. Die Spannung zwischen der ersten Elektrode und der zweiten Elektrode ist die so genannte Pumpspannung, der Strom durch die Zuleitungen ist der so genannte Pumpstrom.

Es ist bekannt, dass bei Änderung der Pumpspannung ein kapazitiver Umladestrom auftritt, der den durch den Sauerstoff-Transport bewirkten Strom überlagert. Das erfindungsgemäße Verfahren wird daher vorteilhaft verbessert, indem bei der Bewertung der Messfähigkeit der Abgas-Sonde bei einer Änderung der Spannung zwischen der ersten Elektrode und der zweiten Elektrode, ein durch die erste und/oder zweite Zuleitung fließender kapazitiver Umladestrom berücksichtigt wird. Die Berücksichtigung dieses kapazitiven Umladestroms verbessert die Trennschärfe der Diagnose.

Die die Vorrichtung betreffende Aufgabe der Erfindung wird dadurch gelöst, dass in der Steuerung ein Schaltkreis oder Programmablauf zur Beaufschlagung der Abgas-Sonde in einer ersten Phase mit einer Spannung zwischen der ersten Elektrode und der zweiten Elektrode zum Transport von Sauerstoff in den Referenzgaskanal und zur Bestimmung eines Pumpstroms in einer zweiten Phase in einem die erste Elektrode und zweiten Elektrode enthaltenden Stromkreis zur Bewertung der Messfähigkeit vorgesehen ist. Diese Ergänzung der Steuerung nutzt aus, dass während der ersten Phase in einem Elektrodenhohlraum an der ersten Elektrode durch elektrochemische Reaktionen Fettgaskomponenten entstehen, die, zusammen mit dem Sauerstoff im Reagenzgaskanal, bei Beginn der zweiten Phase zu einen für einen Betrieb mit fettem Abgas charakteristischen Stromimpuls führen. Fehlt dieser Stromimpuls, wird die Diagnose der Messfähigkeit mit negativem Ergebnis beendet. Vorteilhaft wird ausgenutzt, dass das Abgas der Brennkraftmaschine nicht auf einen Fettbetrieb umgestellt werden muss und somit ein erhöhter Verbrauch und unerwünschte Emissionen während der Diagnose vermieden werden können.

Die Vorrichtung ist zur Diagnose besonders geeignet, wenn die Abgas-Sonde als Lambda-Sonde oder als Stickoxid-Sensor ausgebildet ist. Hierzu können die Vorrichtung und das Verfahren auf konstruktive Unterschiede der Abgas-Sonden bei Bedarf angepasst werden, ohne jedoch den Grundgedanken zu verlassen.

Besonders vorteilhaft werden das Verfahrens und die Vorrichtung zur Diagnose einer Fettmessfähigkeit einer Lambdasonde im Abgaskanal einer Brennkraftmaschine verwendet. Hierbei wird ausgenutzt, dass das Abgas der Brennkraftmaschine nicht auf einen Fettbetrieb umgestellt werden muss und somit ein erhöhter Verbrauch und unerwünschte Emissionen während der Diagnose vermieden werden können.

### Kurze Beschreibung der Zeichnungen

Die Erfindung wird im Folgenden anhand eines in der Figur dargestellten Ausführungsbeispiels näher erläutert. Es zeigt:

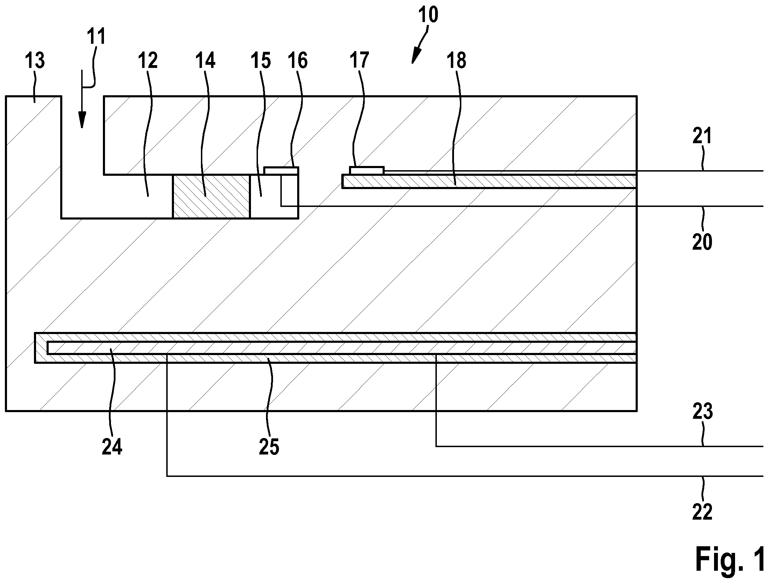

- Figur 1: eine einzellige Abgas-Sonde.

Figur 1 zeigt eine einzellige Abgas-Sonde 10 mit einem Grundkörper 13 und einem Gas-Einlass 12, der zu einem Abgaskanal einer - hier nicht dargestellten - Brennkraftmaschine hin geöffnet ist. Die Abgas-Sonde 10 dient als Lambda-Sonde zur Bestimmung der Zusammensetzung des der Brennkraftmaschine zugeführten Luft-Kraftstoff-Gemischs. Der Grundkörper 13 ist aus einem Festelektrolyten, beispielhaft aus Yttrium-stabilisiertem Zirkoniumdioxid, gefertigt, das bei Betriebstemperatur ionenleitend ist und mit einer geeigneten Anordnung von Elektroden und GasZuführungen zur Bestimmung einer Konzentration bestimmter Komponenten einer Gas-Zusammensetzung geeignet ist. Abgas 11 tritt über den Gas-Einlass 12 durch eine Diffusionsbarriere 14 in einen Elektrodenhohlraum 15. Die Diffusionsbarriere 14 ist ein poröses Element, welches ein Nachströmen von Gas aus dem Gas-Einlass 12 in den Elektrodenhohlraum 15 oder in umgekehrter Richtung zumindest weitgehend verhindert und lediglich einen Diffusionstransport ermöglicht. In dem Elektrodenhohlraum 15 ist ein Teil der Wandung des Grundkörpers 13 mit einer ersten Elektrode 16 belegt, die über eine zweite Zuleitung 21 nach außen geführt ist. Der Grundkörper 13 weist weiterhin einen Referenzgaskanal 18 auf, der mit einem porösen, gasdurchlässigen Medium ausgefüllt ist und dessen Wandung teilweise mit einer zweiten Elektrode 17 belegt ist. Die zweite Elektrode 17 ist über eine erste Zuleitung 20 nach außen geführt. Die erste Elektrode 16 wird auch als innere Pumpelektrode (IPE) bezeichnet. Der Referenzgaskanal 18 wird auch als Abluftkanal (ALK), die zweite Elektrode 17 auch als Abluftelektrode (ALE) bezeichnet. Die erste Elektrode 16 und die zweite Elektrode 17 sind in dem dargestellten Ausführungsbeispiel im Inneren des als Schichtaufbau ausgeführten Grundkörpers 13 angeordnet. Die erste Elektrode 16, die zweite Elektrode 17 und der dazwischen liegende Festelektrolyt des Grundkörpers 13 bilden gemeinsam eine Pumpzelle.

Weiterhin umfasst die Abgas-Sonde 10 in dem dargestellten Ausführungsbeispiel ein Heizelement 24 mit einer Isolierschicht 25, welche das Heizelement 24 umgibt und bei Betriebstemperatur einen elektrischen Kontakt zu anderen Komponenten in der Abgas-Sonde 10 verhindert. Das Heizelement 24 wird über eine erste Heizleitung 22 und eine zweite Heizleitung 23 mit Betriebsspannung versorgt. Die Betriebsspannung wird von einer zugeordneten Steuerung derart geregelt, dass sich ein vorgegebener Innenwiderstand der Pumpzelle einstellt. In der Steuerung der Brennkraftmaschine werden auch die elektrischen Spannungen an der ersten und zweiten Elektrode 16, 17 vorgegeben oder bestimmt und die Ströme in der ersten und zweiten Zuleitung 20, 21 vorgegeben oder bestimmt. Die Innenpumpelektrode oder erste Elektrode 16, welche mit Abgas beaufschlagt ist, ist als Beispiel einer Realisierung an eine virtuelle Masse der Steuerung angeschlossen. Diese virtuelle Masse legt die erste Elektrode 16 auf ein konstantes Elektrodenpotenzial relativ zu einer elektrischen Masse. Die zweite Elektrode 17 oder Abluftelektrode hingegen liegt auf einem variablen Potenzial. Über eine Pumpspannungsquelle wird mittels einer Strommessvorrichtung, beispielhaft mittels eines Messwiderstands, ein Pumpstrom l_{P} durch die Pumpzelle bestimmt. Bei üblichen Schaltungen erfolgt dies derart, dass über eine Einspeisung an einem nichtinvertierenden Eingang eines Operationsverstärkers eine Pumpspannung U_{P} der Pumpspannungsquelle geregelt wird, um bei einer Messung an Luft eine höhere Pumpspannung von 900 mV, bei Fettgas hingegen eine kleinere Pumpspannung U_{P} von 200 mV einzustellen. Zwischen der ersten Elektrode 16 und der zweiten Elektrode 17 stellt sich eine von der Zusammensetzung des Abgases abhängige NernstSpannung U_{N} ein.

Alternativ ist die Diagnose auch bei digitalem diskontinuierlichem Betrieb der elektrochemischen Zelle mit einem pulsierenden Pumpstrom möglich.

Erfindungsgemäß wird zur Vorbereitung einer Diagnose der Fettmessfähigkeit der Abgas-Sonde 10 vorübergehend eine hohe Pumpspannung U_{P} zwischen der ersten Elektrode 16 und der zweiten Elektrode 17 angelegt. Hierdurch füllt sich der Referenzgaskanal 18 in dieser auch als "Atem-Modus" bezeichneten Phase mit Sauerstoff. Während des Atem-Modus ist das Ausgangs-Signal der Abgas-Sonde 10 nicht zur Bestimmung des Lambdawerts geeignet. Ist der Referenzgaskanal 18 ausreichend mit Sauerstoff gefüllt, kann für die Diagnose ein bei Rückkehr zum normalen Messbetrieb kurzzeitig auftretender Fettbetrieb ausgenutzt werden. Diese Diagnose liefert zumindest eine qualitative Aussage zur Fettmessfähigkeit ohne der Abgas-Sonde 10 ein reales fettes Gasgemisch zuführen zu müssen.

## Patentansprüche

1. Verfahren zur Diagnose einer Messfähigkeit einer Abgas-Sonde (10) in einem Abgaskanal einer Brennkraftmaschine, wobei als Abgas-Sonde (10) ein Sondenaufbau mit einem Speichervolumen in einem Referenzgaskanal (18), zumindest einer einem mit dem Abgaskanal verbundenen Elektrodenhohlraum (15) zugewandten ersten Elektrode (16) und einer dem Referenzgaskanal (18) zugewandten zweiten Elektrode (17) verwendet wird, **dadurch gekennzeichnet, dass** in einer ersten Phase zwischen die erste Elektrode (16) und die zweite Elektrode (17) eine solch hohe elektrische Spannung angelegt wird, dass der Referenzgaskanal (18) durch Zersetzung von Wasser und/oder Kohlendioxid mit zusätzlichem Sauerstoff befüllt wird und dass in einer zweiten Phase ein Pumpstrom in einem die erste Elektrode (16) und die zweiten Elektrode (17) enthaltenden Stromkreis zur Bewertung der Messfähigkeit herangezogen wird.

2. Verfahren nach Anspruch 1, **dadurch gekennzeichnet, dass** als Messfähigkeit eine Fettmessfähigkeit der Abgas-Sonde (10) bestimmt wird.

3. Verfahren nach Anspruch 1 oder 2, **dadurch gekennzeichnet, dass** zur Bewertung der Fettmessfähigkeit der Abgas-Sonde (10) die zweite Phase mit dem Sauerstoff-Transport vom Referenzgaskanal (18) zum Elektrodenhohlraum (15) verwendet wird.

4. Verfahren nach einem der Ansprüche 1 bis 3, **dadurch gekennzeichnet, dass** zur Bewertung der Messfähigkeit der Abgas-Sonde (10) zusätzlich Betriebsparameter und/oder Funktionswerte während der ersten Phase herangezogen werden und dass als Funktionswerte zumindest die Spannung zwischen der ersten Elektrode (16) und der zweiten Elektrode (17), ein durch eine erste und/oder zweite Zuleitung (20, 21) zu der ersten und der zweite Elektrode (16, 17) fließender Strom und/oder ein zeitlicher Verlauf der Spannung und/oder des Stroms einzeln oder in Kombination der Maßnahmen verwendet werden.

5. Verfahren nach einem der Ansprüche 1 bis 4, **dadurch gekennzeichnet, dass** bei der Bewertung der Messfähigkeit der Abgas-Sonde (10) bei einer Änderung der Spannung zwischen der ersten Elektrode (16) und der zweiten Elektrode (17), ein durch die erste und/oder zweite Zuleitung (20, 21) fließender kapazitiver Umladestrom berücksichtigt wird.

6. Vorrichtung zur Diagnose einer Messfähigkeit einer Abgas-Sonde (10) in einem Abgaskanal einer Brennkraftmaschine wobei die Abgas-Sonde (10) einen Referenzgaskanal (18) mit einem Speichervolumen und zumindest einer einem mit dem Abgaskanal verbundenen Elektrodenhohlraum (15) zugewandten erste Elektrode (16) und eine dem Referenzgaskanal (18) zugewandte zweite Elektrode (17) aufweist und wobei der Abgas-Sonde (10) eine Steuerung zur Beaufschlagung der Abgas-Sonde (10) mit Spannungs-und Stromsignalen und zur Auswertung von Spannungs- und Stromsignalen zugeordnet ist, **dadurch gekennzeichnet, dass** in der Steuerung ein Schaltkreis oder Programmablauf zur Beaufschlagung der Abgas-Sonde (10) in einer ersten Phase mit einer Spannung zwischen der ersten Elektrode (16) und der zweiten Elektrode (17) zum Transport von Sauerstoff in den Referenzgaskanal (18) und zur Bestimmung eines Pumpstroms in einer zweiten Phase in einem die erste Elektrode (16) und die zweiten Elektrode (17) enthaltenden Stromkreis zur Bewertung der Messfähigkeit vorgesehen ist.

7. Vorrichtung nach Anspruch 7, **dadurch gekennzeichnet, dass** die Abgas-Sonde (10) als Lambda-Sonde oder als Stickoxid-Sensor ausgebildet ist.

8. Anwendung des Verfahrens und der Vorrichtung nach einem der vorgenannten Ansprüche zur Diagnose einer Fettmessfähigkeit einer Lambdasonde im Abgaskanal einer Brennkraftmaschine.

## Claims

1. Method for diagnosing a measuring ability of an exhaust gas probe (10) in an exhaust gas duct of an internal combustion engine, wherein a probe design with a storage volume in a reference gas duct (18), at least one first electrode (16) which is connected to the exhaust gas duct and faces an electrode cavity (15), and one second electrode (17) which faces the reference gas duct (18) is used as the exhaust gas probe (10), **characterized in that** in a first phase such a high electrical voltage is applied between the first electrode (16) and the second electrode (17) that the reference gas duct (18) is filled with additional oxygen through the decomposition of water and/or carbon dioxide, and **in that** in a second phase a pumping current in a circuit containing the first electrode (16) and the second electrode (17) is used to evaluate the measuring capability.

2. Method according to Claim 1, **characterized in that** a rich-mixture-measuring capability of the exhaust gas probe (10) is determined as the measuring capability.

3. Method according to Claim 1 or 2, **characterized in that** the second phase with the oxygen transportation from the reference gas duct (18) to the electrode cavity (15) is used to evaluate the rich-mixture-measuring capability of the exhaust gas probe (10).

4. Method according to one of Claims 1 to 3, **characterized in that** operating parameters and/or functional values are additionally used during the first phase to evaluate the measuring capability of the exhaust gas probe (10), and **in that** at least the voltage between the first electrode (16) and the second electrode (17), a current flowing to the first and the second electrodes (16, 17) through a first and/or second feed line (20, 21) and/or a time profile of the voltage and/or of the current are used as function values, individually or in a combination of the measures.

5. Method according to one of Claims 1 to 4, **characterized in that** during the evaluation of the measuring capability of the exhaust gas probe (10), a capacity recharging current which flows through the first and/or second feed lines (20, 21) is taken into account when there is a change in the voltage between the first electrode (16) and the second electrode (17).

6. Device for diagnosing a measuring capability of an exhaust gas probe (10) in an exhaust gas duct of an internal combustion engine, wherein the exhaust gas probe (10) has a reference gas duct (18) with a storage volume and at least one first electrode (16) which is connected to the exhaust gas duct and faces an electrode cavity (15), and one second electrode (17) which faces the reference gas duct (18), and wherein the exhaust gas probe (10) is assigned a controller for applying voltage signals and current signals to the exhaust gas probe (10), and for evaluating voltage signals and current signals, **characterized in that** in the controller a circuit or program sequence is provided for applying, in a first phase, a voltage to the exhaust gas probe (10) between the first electrode (16) and the second electrode (17) in order to transport oxygen into the reference gas duct (18), and for determining, in a second phase, a pumping current in a circuit which contains the first electrode (16) and the second electrode (17) and has the purpose of evaluating the measuring capability.

7. Device according to Claim 7, **characterized in that** the exhaust gas probe (10) is embodied as a lambda probe or as a nitrogen oxide sensor.

8. Use of the method and of the device according to one of the preceding claims for diagnosing a rich-mixture-measuring capability of a lambda probe in the exhaust gas duct of an internal combustion engine.

## Revendications

1. Procédé de diagnostic de la capacité de mesure d'une sonde de gaz d'échappement (10) dans un conduit de gaz d'échappement d'un moteur à combustion interne, dans lequel on utilise en tant que sonde de gaz d'échappement (10) une structure de sonde comprenant un volume accumulateur dans un conduit de gaz de référence (18), au moins une première électrode (16) tournée vers une cavité d'électrode (15) connectée au conduit de gaz d'échappement et une deuxième électrode (17) tournée vers le conduit de gaz de référence (18), **caractérisé en ce que** dans une première phase, une tension électrique est appliquée entre la première électrode (16) et la deuxième électrode (17), avec une intensité telle que le conduit de gaz de référence (18) soit rempli avec de l'oxygène supplémentaire par décomposition d'eau et/ou de dioxyde de carbone et **en ce que**, dans une deuxième phase, un courant de pompe est utilisé dans un circuit de courant contenant la première électrode (16) et la deuxième électrode (17), en vue d'évaluer la capacité de mesure.

2. Procédé selon la revendication 1, **caractérisé en ce qu'**une capacité de mesure pour un rapport riche de la sonde de gaz d'échappement (10) est déterminée en tant que capacité de mesure.

3. Procédé selon la revendication 1 ou 2, **caractérisé en ce que** pour analyser la capacité de mesure pour un rapport riche de la sonde de gaz d'échappement (10), la deuxième phase est utilisée avec le transport d'oxygène depuis le conduit de gaz de référence (18) jusqu'à la cavité d'électrode (15).

4. Procédé selon l'une quelconque des revendications 1 à 3, **caractérisé en ce que** pour analyser la capacité de mesure de la sonde de gaz d'échappement (10), on utilise en outre des paramètres de fonctionnement et/ou des valeurs de fonctionnement pendant la première phase, et **en ce que** l'on utilise en tant que valeurs de fonctionnement au moins la tension entre la première électrode (16) et la deuxième électrode (17), un courant s'écoulant à travers la première et/ou la deuxième conduite d'alimentation (20, 21) vers la première et la deuxième électrode (16, 17) et/ou une évolution dans le temps de la tension et/ou du courant, individuellement ou par combinaison de ces mesures.

5. Procédé selon l'une quelconque des revendications 1 à 4, **caractérisé en ce que** lors de l'analyse de la capacité de mesure de la sonde de gaz d'échappement (10), lors d'une modification de la tension entre la première électrode (16) et la deuxième électrode (17), on tient compte d'un courant de charge capacitif s'écoulant à travers la première et/ou la deuxième conduite d'alimentation (20, 21).

6. Dispositif de diagnostic d'une capacité de mesure d'une sonde de gaz d'échappement (10) dans un conduit de gaz d'échappement d'un moteur à combustion interne, dans lequel la sonde de gaz d'échappement (10) présente un conduit de gaz de référence (18) avec un volume accumulateur et au moins une première électrode (16) tournée vers une cavité d'électrode (15) connectée au conduit de gaz d'échappement et une deuxième électrode (17) tournée vers le conduit de gaz de référence (18), et dans lequel une commande pour solliciter la sonde de gaz d'échappement (10) avec des signaux de tension et de courant et pour analyser des signaux de tension et de courant est associée à la sonde de gaz d'échappement (10), **caractérisé en ce que** l'on prévoit dans la commande, un circuit de commutation ou un déroulement de programme pour solliciter la sonde de gaz d'échappement (10) dans une première phase avec une tension entre la première électrode (16) et la deuxième électrode (17) en vue du transport d'oxygène dans le conduit de gaz de référence (18) et en vue de déterminer un courant de pompe dans une deuxième phase, dans un circuit de courant contenant la première électrode (16) et la deuxième électrode (17) en vue d'évaluer la capacité de mesure.

7. Dispositif selon la revendication 7, **caractérisé en ce que** la sonde de gaz d'échappement (10) est réalisée sous forme de sonde lambda ou sous forme de capteur d'azote.

8. Utilisation du procédé et du dispositif selon l'une quelconque des revendications précédentes, pour le diagnostic d'une capacité de mesure de rapport riche d'une sonde lambda dans le conduit de gaz d'échappement d'un moteur à combustion interne.
